# EUROPEAN PATENT APPLICATION

(11) **EP 4 620 760 A1**
(43) Date of publication of application: **24.09.2025**
(21) Application number: 24787735.0
(22) Date of filing: 05.01.2024
(51) Int. Cl.: B60W 30/095, B60W 60/00, B60W 40/02, B60W 40/10, B60W 50/14, G05D 1/24

(54) **RISK IDENTIFICATION FOR AUTONOMOUS DRIVING**

(30) Priority: 11.04.2023 CN 202310382072
(71) Applicant: Beijing Sankuai Online Technology Co., Ltd., Beijing 100080 (CN); Shenzhen Meituan Technology Co., Ltd, Shenzhen, Guangdong 518131 (CN)
(72) Inventor: LV, Hualong, Beijing 100080 (CN)
(74) Representative: Studio Torta S.p.A.
(86) International application number: PCT/CN2024/070885
(87) International publication number: WO 2024/212628

(57) **Abstract**

A risk identification method for autonomous driving. The method comprises: acquiring a predicted spatio-temporal trajectory of a first obstacle and a planned spatio-temporal trajectory of an autonomous vehicle, wherein the first obstacle is a dynamic obstacle in the current scenario (step S11); establishing a spatio-temporal interaction scenario graph of the current scenario according to the predicted spatio-temporal trajectory of the first obstacle, the planned spatio-temporal trajectory of the autonomous vehicle and a first map parameter (step S12); and acquiring spatio-temporal interaction features of the current scenario according to the spatio-temporal interaction scenario graph of the current scenario, inputting the spatio-temporal interaction features of the current scenario into a pre-trained model, and determining the interaction safety of the autonomous vehicle in the current scenario by means of the pre-trained model, wherein the interaction safety is used for indicating a risk of autonomous driving (step S13).

## Description

This application claims priority to Chinese Patent Application No. 202310382072.6, filed on April 11, 2023 and entitled "RISK IDENTIFICATION METHOD FOR AUTONOMOUS DRIVING AND AUTONOMOUS DRIVING VEHICLE", which is incorporated herein by reference in its entirety.

### TECHNICAL FIELD

Embodiments of the present disclosure relate to the field of autonomous driving, and to risk identification for autonomous driving.

### BACKGROUND

In the field of autonomous driving, driving safety of an autonomous driving vehicle in an autonomous driving mode is an important issue of common concern to system suppliers and users currently.

At present, in a risk identification method for autonomous driving, a time to collision (TTC) is usually adopted, that is, a minimum time to collision between an obstacle and an autonomous driving vehicle, to measure an interaction risk between the obstacle and the autonomous driving vehicle.

### SUMMARY

Embodiments of the present disclosure provide a risk identification for autonomous driving, so as to predict a potential risk of an autonomous driving vehicle in advance, and adapt to a complex scene.

According to a first aspect, an embodiment provides a risk identification method for autonomous driving, including: obtaining a predicted spatial-temporal trajectory of a first obstacle and a planned spatial-temporal trajectory of an autonomous driving vehicle, where the first obstacle is a dynamic obstacle in a current scene; establishing a spatial-temporal interaction scene graph of the current scene based on the predicted spatial-temporal trajectory of the first obstacle, the planned spatial-temporal trajectory of the autonomous driving vehicle, and a first map parameter; and obtaining a spatial-temporal interaction feature of the current scene based on the spatial-temporal interaction scene graph of the current scene, inputting the spatial-temporal interaction feature of the current scene into a pre-trained model, and determining interaction safety of the autonomous driving vehicle in the current scene through the pre-trained model, where the interaction safety is configured for indicating a risk of autonomous driving.

According to a second aspect, an autonomous driving vehicle is provided, having a processor and a memory, where the memory stores a computer instruction, and when the computer instruction is executed by the processor, the autonomous driving vehicle implements the steps of the method according to the first aspect.

According to a third aspect, a non-temporary computer-readable storage medium is further provided, storing at least one computer program, where the at least one computer program is loaded and executed by a processor to cause a computer device to implement the steps of the method according to the first aspect.

According to a fourth aspect, a computer program product or a computer program is further provided, including a computer instruction, where the computer instruction is stored in a computer-readable storage medium. A processor of a computer device reads the computer instruction from the computer-readable storage medium, and the processor executes the computer instruction to cause the computer device to perform the steps of the method according to the first aspect.

Through different embodiments of the present disclosure, a spatial-temporal interaction scene graph of a current driving scene may be constructed through a predicted spatial-temporal trajectory of the dynamic obstacle and a traveling trajectory of the autonomous driving vehicle, and interaction safety of the autonomous driving vehicle may be determined based on the spatial-temporal interaction scene graph and a pre-trained model. In this manner, an interaction risk may be predicted at a relatively long distance from a risk point based on a predicted obstacle trajectory and a planned spatial-temporal trajectory of the autonomous driving vehicle, to reserve processing time for a driver or the vehicle to take risk avoidance actions in time.

Other features and advantages of the embodiments of the present disclosure become apparent through the following detailed description of exemplary embodiments of the present disclosure with reference to the accompanying drawings.

### BRIEF DESCRIPTION OF THE DRAWINGS

The accompanying drawings that are incorporated into and constitute a part of the specification illustrate embodiments of the present disclosure, and are used to explain the principle of the embodiments of the present disclosure together with the description thereof.
FIG. 1 is a flowchart of a risk identification method for autonomous driving according to an embodiment of the present disclosure.
FIG. 2 is a schematic diagram of a grid semantic map according to an embodiment of the present disclosure.
FIG. 3 is a block diagram of an autonomous driving vehicle according to an embodiment of the present disclosure.
FIG. 4 is a schematic structural diagram of a risk identification apparatus for autonomous driving according to an embodiment of the present disclosure.

### DETAILED DESCRIPTION OF THE EMBODIMENTS

Various exemplary embodiments of the present disclosure are described in detail with reference to the accompanying drawings. It should be noted that unless otherwise specified, relative arrangement of the components and steps, numerical expressions, and numerical values stated in these embodiments do not limit the scope of the embodiments of the present disclosure.

The following descriptions of at least one exemplary embodiment are merely illustrative, and in no way constitute any limitation on the embodiments of the present disclosure and application or use thereof.

Technologies, methods, and devices known to a person of ordinary skill in the related art may not be discussed in detail, but in proper circumstances, the technologies, methods, and devices shall be regarded as a part of the specification.

In all examples shown and discussed herein, any value should be construed as merely exemplary and not as a limitation. Therefore, other examples of the exemplary embodiments may have different values.

It should be noted that similar reference numerals and letters denote similar items in the accompanying drawings below. Therefore, once a certain item is defined in an accompanying drawing, the item does not need to be further discussed in subsequent accompanying drawings.

It should be noted that all actions of obtaining a signal, information, or data in this application are performed under the premise of complying with corresponding data protection regulations and policies of a country where this application is located, and with authorization of a corresponding apparatus/account owner.

Driving safety of a vehicle in an autonomous driving mode is always an important issue of common concern to system suppliers and users currently. However, the existing technology lacks a driving safety assessment method for vehicles in the autonomous driving mode, which greatly affects confidence of people in autonomous driving. Currently, in the field of autonomous driving, in an existing risk identification method, a time to collision (TTC) is usually adopted, that is, a minimum time to collision between an obstacle and an autonomous driving vehicle, to measure an obstacle interaction risk. However, this manner may be performed only when an obstacle is at a relatively small distance to the autonomous driving vehicle. Therefore, a potential risk cannot be predicted in advance, and risk avoidance actions cannot be taken in time. In addition, the TTC algorithm can only take into account the situations in some scenarios, and cannot adapt to some emergencies in complex and changeable scenarios, which may lead to unsafe operations such as inaccurate braking and affect safety of passengers.

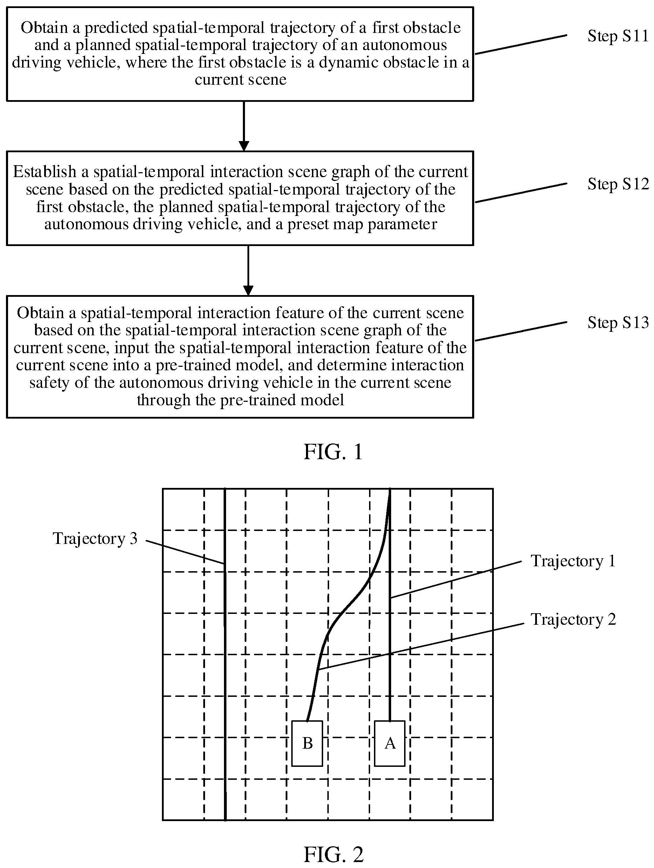

As shown in FIG. 1, an embodiment of this application discloses a risk identification method for autonomous driving. The method includes step S11 to step S13.

Step S11: Obtain a predicted spatial-temporal trajectory of a first obstacle and a planned spatial-temporal trajectory of an autonomous driving vehicle, where the first obstacle is a dynamic obstacle in a current scene.

In an example of this embodiment, the autonomous driving vehicle may collect data of a current driving scene of the autonomous driving vehicle and perceive obstacles in a surrounding environment through sensors such as a laser radar, an image sensor, and an inertial navigation unit, for example, at least one of the sensors such as a laser radar, an image sensor, and an inertial navigation unit.

The current driving scene is also referred to as a current scene, and data of the current driving scene is also referred to as current scene data. The surrounding environment refers to an environment around the autonomous driving vehicle in the current scene. Therefore, the obstacles in the surrounding environment may also be referred to as obstacles in the current scene. The obstacles in the current scene may include a static obstacle and a dynamic obstacle. The dynamic obstacle in the current scene is the foregoing first obstacle. Exemplarily, in this embodiment, a traveling trajectory of the dynamic obstacle (that is, the first obstacle) may be predicted based on the collected current scene data, that is, the predicted spatial-temporal trajectory. Optionally, in this embodiment, a planned spatial-temporal trajectory of the autonomous driving vehicle may also be planned based on the data of the current driving scene.

Step S12: Establish a spatial-temporal interaction scene graph of the current scene is established based on the predicted spatial-temporal trajectory of the first obstacle, the planned spatial-temporal trajectory of the autonomous driving vehicle, and a preset map parameter.

In this embodiment, the predicted spatial-temporal trajectory of the obstacle (that is, the first obstacle) and the planned spatial-temporal trajectory of the vehicle (that is, the autonomous driving vehicle) in the current driving scene may carry information corresponding to the trajectories. The information corresponding to the trajectories may include, but is not limited to, location information, time information, attribute information of the obstacle (that is, the first obstacle) or the autonomous driving vehicle, and the like. For example, the information corresponding to the trajectories includes at least one of location information, time information, attribute information of the first obstacle, and attribute information of the autonomous driving vehicle.

For example, the location information may be a location where the obstacle (that is, the first obstacle) or the autonomous driving vehicle is located, and a location corresponding to a predicted trajectory. In other words, the location information of the first obstacle may include a location of the first obstacle and a location corresponding to the predicted spatial-temporal trajectory of the first obstacle. The predicted spatial-temporal trajectory may include a plurality of first trajectory points, and the location corresponding to the predicted spatial-temporal trajectory includes a location of each first trajectory point. The location information of the autonomous driving vehicle may include a location of the autonomous driving vehicle and the location corresponding to the planned spatial-temporal trajectory of the autonomous driving vehicle. The planned spatial-temporal trajectory may include a plurality of second trajectory points, and the location corresponding to the planned spatial-temporal trajectory includes a location of each second trajectory point.

The time information may be an estimated time for the obstacle (that is, the first obstacle) or the autonomous driving vehicle to move to a location in the trajectory. The time information of the first obstacle may include an estimated time for the first obstacle to move to each first trajectory point in the predicted spatial-temporal trajectory. For the first obstacle, the first trajectory point is a location in the predicted spatial-temporal trajectory. The time information of the autonomous driving vehicle may include an estimated time for the autonomous driving vehicle to move to each second trajectory point in the planned spatial-temporal trajectory. For the autonomous driving vehicle, the second trajectory point is a location in the planned spatial-temporal trajectory.

The attribute information of the obstacle (that is, the first obstacle) may include a type and length and width sizes of the obstacle (that is, the first obstacle), an estimated speed at which the obstacle (that is, the first obstacle) moves to a location in the trajectory, and the like. The location in the trajectory is the location in the foregoing predicted spatial-temporal trajectory, and details are not described herein.

The attribute information of the autonomous driving vehicle may include length and width sizes of the autonomous driving vehicle, an estimated speed at which the autonomous driving vehicle moves to a location in the trajectory, and the like. The location in the trajectory is a location in the foregoing planned spatial-temporal trajectory, and details are not described herein.

In an example of this embodiment, the establishing a spatial-temporal interaction scene graph of the current scene is established based on the predicted spatial-temporal trajectory of the first obstacle, the planned spatial-temporal trajectory of the autonomous driving vehicle, and a preset map parameter includes: establishing a grid map of the current scene based on the preset map parameter, where the preset map parameter includes a map size parameter and a map resolution parameter; determining a first grid corresponding to the predicted spatial-temporal trajectory of the first obstacle in the grid map and a second grid corresponding to the planned spatial-temporal trajectory of the autonomous driving vehicle in the grid map, and determining grid semantic information in the first grid and the second grid based on the predicted spatial-temporal trajectory and the planned spatial-temporal trajectory, that is, determining grid semantic information in the first grid and grid semantic information in the second grid; and inputting the grid semantic information into a corresponding grid to obtain (or to acquire, get) the spatial-temporal interaction scene graph of the current scene. In other words, in this embodiment, the spatial-temporal interaction scene graph may be a grid semantic map, and the grid semantic map is obtained by inputting the grid semantic information into the grid map.

As described above, the preset map parameter may include a map size parameter and a map resolution parameter. The preset map parameter for establishing the spatial-temporal interaction scene graph of the current scene is also referred to as a first map parameter. The first map parameter may be preset, or may be obtained on another occasion, which is not limited in the embodiments of this application.

Exemplarily, when the spatial-temporal interaction scene graph of the current scene of the autonomous driving vehicle is established, a map may be established with the autonomous driving vehicle as a reference point. The map size parameter may include a distance parameter extending in various directions with the reference point as the reference point. The various directions include, but are not limited to left, right, front, rear, left front, left rear, right front, right rear, and the like, which is not limited herein. For example, the map size parameter may be set to extend to the left and the right by 30 meters respectively, the front by 50 meters, and the rear by 10 meters with the autonomous driving vehicle as the reference point to establish a map with a size of 60 meters*60 meters. Exemplarily, the map resolution parameter may be set to a side length of a single grid, for example, may be set based on a map size of a target. A map of 60 meters*60 meters is used as an example. A side length of a grid may be set to 0.4 meters, to form a grid map with a resolution of 150*150 grids.

After the grid map corresponding to the current scene is established, corresponding grids of the predicted spatial-temporal trajectory and the planned spatial-temporal trajectory in the grid map may be determined based on the location information in the predicted spatial-temporal trajectory of the first obstacle and the location information in the planned spatial-temporal trajectory of the autonomous driving vehicle. For example, a corresponding grid, that is, the first grid, of the predicted spatial-temporal trajectory in the grid map is determined based on the location information (for example, the location corresponding to the predicted spatial-temporal trajectory above) of the first obstacle. A corresponding grid, that is, the second grid, of the planned spatial-temporal trajectory in the grid map is determined based on the location information (for example, the location corresponding to the planned spatial-temporal trajectory above) of the autonomous driving vehicle.

For example, as shown in FIG. 2, a planned spatial-temporal trajectory of an autonomous driving vehicle A is a trajectory 1, a predicted spatial-temporal trajectory of a dynamic obstacle B is a trajectory 2, and grids corresponding to the trajectory 1 and the trajectory 2 may be respectively determined based on corresponding location information in the trajectory 1 and the trajectory 2, that is, a first grid corresponding to the trajectory 2 in the grid map and a second grid corresponding to the trajectory 1 in the grid map.

In addition, the first grid and the second grid may be one grid. Alternatively, the first grid and the second grid may include the same grids. For example, as shown in FIG. 2, the same grids included in the first grid and the second grid include the sixth grid from the left of the first row, and the sixth grid from the left of the second row.

In an example, in a process of determining grids corresponding to the planned spatial-temporal trajectory and the predicted spatial-temporal trajectory in this embodiment, a length and a width of the first obstacle may not be considered, and a length and a width of the autonomous driving vehicle is not considered. Instead, the first obstacle and the autonomous driving vehicle are both simplified to a relatively small point in the grid map.

In another example, in a process of determining grids corresponding to the planned spatial-temporal trajectory and the predicted spatial-temporal trajectory, a length and a width of the obstacle (that is, the first obstacle) and a length and a width of the autonomous driving vehicle may be considered. To be specific, in a process of determining grids corresponding to the trajectories, grids occupied by the obstacle or the vehicle when traveling in the trajectory are also used as the grids corresponding to the trajectories. Alternatively, the first obstacle and the autonomous driving vehicle are respectively simplified to a polygon in the grid map. A size of the polygon corresponding to the first obstacle is determined based on the length and the width of the first obstacle, and a size of the polygon corresponding to the autonomous driving vehicle is determined based on the length and the width of the autonomous driving vehicle. The length and the width of the first obstacle may be obtained based on the attribute information of the first obstacle above. The length and the width of the autonomous driving vehicle may be obtained based on the attribute of the autonomous driving vehicle above.

Certainly, in this embodiment, only the length and the width of the first obstacle may be considered, and the length and the width of the autonomous driving vehicle are not considered. Alternatively, only the length and the width of the autonomous driving vehicle are considered, and the length and the width of the first obstacle are not considered. Details are not described herein.

It should be noted that although only one dynamic obstacle B appears in the example in FIG. 2, a person skilled in the art can understand that the present disclosure is not limited thereto. The first obstacle may include one or more dynamic obstacles in the current scene.

In addition, the current scene in the foregoing embodiment is not determined by the map size, that is, the dynamic obstacle in the current scene may exist outside the spatial-temporal interaction scene graph. When the grid corresponding to the predicted spatial-temporal trajectory of the first obstacle in the grid map is determined, the predicted spatial-temporal trajectory of a dynamic obstacle outside the spatial-temporal interaction scene graph may also be determined. For example, for a trajectory 3 in FIG. 2, the trajectory 3 may be a predicted spatial-temporal trajectory of a certain dynamic obstacle currently located outside the spatial-temporal interaction scene graph, which may be a vehicle located in an opposite lane in the front or a vehicle in the same lane in the rear.

After the grids corresponding to the predicted spatial-temporal trajectory and the planned spatial-temporal trajectory are determined, grid semantic information in each corresponding grid may be determined based on the predicted spatial-temporal trajectory and the planned spatial-temporal trajectory.

The grid semantic information may be directly obtained based on information carried in the trajectory or further determined based on the spatial-temporal interaction scene graph. For example, grid semantic information such as a speed and time when the autonomous driving vehicle travels to a corresponding grid, and a speed and time when the obstacle (that is, the first obstacle) moves to a corresponding grid may be directly determined based on the predicted spatial-temporal trajectory and the planned spatial-temporal trajectory.

For example, an estimated time when the autonomous driving vehicle travels to a corresponding grid may be determined based on the time information of the autonomous driving vehicle above, and an estimated speed of the autonomous driving vehicle when traveling to a corresponding grid may be determined based on the attribute information of the autonomous driving vehicle above. An estimated time when the first obstacle moves to a corresponding grid may be determined based on the time information of the first obstacle above, and an estimated speed of the first obstacle when moving to a corresponding grid may be determined based on the attribute information of the first obstacle above.

Other grid semantic information, such as a relative speed and a relative orientation between the obstacle and the vehicle, and an interaction time distance and an interaction space distance between the obstacle and the vehicle, may be obtained based on the grid map. The obstacle herein and in the next paragraph refers to the first obstacle, and the vehicle herein and in the next paragraph refers to the autonomous driving vehicle.

The interaction space distance between the obstacle and the vehicle refers to a distance between the obstacle and the vehicle at a certain moment. For example, in the 10^{th} second, when the obstacle reaches a grid A, and the autonomous driving vehicle reaches a grid B, the interaction space distance between the first obstacle and the autonomous driving vehicle in the 10^{th} second is a distance between the grid A and the grid B. The interaction time distance between the obstacle and the vehicle refers to a time difference when the obstacle and the autonomous driving vehicle both reach a same grid. For example, if the obstacle reaches a grid D in the 12^{th} second, and the autonomous driving vehicle reaches the grid D in the 15^{th} second, the interaction time distance between the obstacle and the vehicle in the grid D is 3 seconds.

In an example of this embodiment, after the grid semantic information in the first grid and the second grid is determined, the grid semantic information may be directly inputted into a corresponding grid, that is, grid semantic information of the first grid is inputted into the corresponding first grid, and grid semantic information of the second grid is inputted into the corresponding second grid, so as to obtain the spatial-temporal interaction scene graph of the current scene.

Alternatively, in another example of this embodiment, before the inputting the grid semantic information into a corresponding grid to obtain the spatial-temporal interaction scene graph of the current scene, the method further includes: determining a location of a second obstacle, where the second obstacle is a static obstacle in the current scene; and determining a third grid corresponding to the second obstacle in the grid map, and determining grid semantic information in the third grid based on the location of the second obstacle. Correspondingly, when the grid semantic information is inputted into a corresponding grid, not only the grid semantic information of the first grid is inputted into the corresponding first grid and the grid semantic information of the second grid is inputted into the corresponding second grid, but also grid semantic information of the third grid is inputted into the corresponding third grid, thereby obtaining the spatial-temporal interaction scene graph of the current scene.

In this embodiment, a location of the static obstacle may further be determined based on the collected current scene data, and the third grid corresponding to the static obstacle in the grid map is determined based on the location of the static obstacle. In addition, the grid semantic information of the third grid may further be determined, for example, a type of an obstacle, a relative orientation between the obstacle and the vehicle, and an interaction time distance and an interaction space distance between the obstacle and the vehicle. The grid semantic information of the third grid may be determined based on the location of the static obstacle, or may be determined in another manner. Details are not described herein.

Generally, the autonomous driving vehicle automatically avoids the static obstacle when planning a path. However, when a road condition is relatively complex, for example, a road is narrow, the static obstacle in the current scene may also affect the dynamic obstacle or normal driving of the autonomous driving vehicle. Therefore, the static obstacle and the corresponding grid semantic information thereof may further be added to the grid semantic map, so that the established spatial-temporal interaction scene graph carries more comprehensive information. In subsequent step S13, the pre-trained model may determine the interaction safety of the autonomous driving vehicle in the current scene based on the more comprehensive information, and may process a more complex interaction scene.

In an example of this embodiment, the grid semantic map may be filled with different colors, so as to distinguish between different situations corresponding to different grids. For example, a grid (which may not include a grid overlapping with the predicted spatial-temporal trajectory) corresponding to the planned spatial-temporal trajectory may be filled with green, a grid (which may not include a grid overlapping with the planned spatial-temporal trajectory) corresponding to the predicted spatial-temporal trajectory may be filled with blue, a grid corresponding to the static obstacle may be filled with gray, and a grid where the planned spatial-temporal trajectory and the predicted spatial-temporal trajectory overlap may be indicated (filled) with red. In an example of this embodiment, the grid semantic map may be displayed to a user of the autonomous driving vehicle.

Step S13: Obtain a spatial-temporal interaction feature of the current scene based on the spatial-temporal interaction scene graph of the current scene, input the spatial-temporal interaction feature of the current scene into a pre-trained model, and determine interaction safety of the autonomous driving vehicle in the current scene through the pre-trained model.

In an example of this embodiment, the spatial-temporal interaction feature includes at least one of a vehicle speed, an obstacle speed, an obstacle type, location time information, a relative speed between the obstacle and the autonomous driving vehicle, a relative orientation between the obstacle and the autonomous driving vehicle, and an interaction time distance and an interaction space distance between the obstacle and the autonomous driving vehicle.

The vehicle speed includes a speed of the autonomous driving vehicle. The obstacle includes the first obstacle. Alternatively, the obstacle speed may include a speed of the first obstacle, and a speed of the second obstacle. The location time information may include location information of the autonomous driving vehicle, time information of the autonomous driving vehicle, location information of the first obstacle, and time information of the first obstacle. The relative speed between the obstacle and the autonomous driving vehicle may include a relative speed between the first obstacle and the autonomous driving vehicle. The relative orientation between the obstacle and the autonomous driving vehicle may include a relative orientation between the first obstacle and the autonomous driving vehicle, and a relative orientation between the second obstacle and the autonomous driving vehicle. The interaction time distance between the obstacle and the autonomous driving vehicle may include an interaction time distance between the first obstacle and the autonomous driving vehicle, and an interaction time distance between the second obstacle and the autonomous driving vehicle. The interaction space distance between the obstacle and the autonomous driving vehicle may include an interaction space distance between the first obstacle and the autonomous driving vehicle, and an interaction space distance between the second obstacle and the autonomous driving vehicle.

In an example of this embodiment, the obtaining a spatial-temporal interaction feature of the current scene based on the spatial-temporal interaction scene graph of the current scene includes: obtaining the grid semantic information from the spatial-temporal interaction scene graph of the current scene as the spatial-temporal interaction feature of the current scene.

In this embodiment, the planned spatial-temporal trajectory of the autonomous driving vehicle, the predicted spatial-temporal trajectory of the obstacle, or the grid semantic information of the corresponding grid of the location of the static obstacle may be obtained from the spatial-temporal interaction scene graph. For example, grid semantic information corresponding to at least one of the first grid, the second grid, and the third grid is obtained as the spatial-temporal interaction feature of the current scene.

After the spatial-temporal interaction feature of the current scene is obtained based on the spatial-temporal interaction scene graph of the current scene, the spatial-temporal interaction feature of the current scene may be inputted into a pre-trained model, and the interaction safety of the autonomous driving vehicle in the current scene is determined through the pre-trained model. In other words, the interaction safety of the autonomous driving vehicle in the current scene that is outputted by the pre-trained model is obtained. The interaction safety is configured for indicating a risk of autonomous driving. High interaction safety indicates a low risk of autonomous driving, and low interaction safety indicates a high risk of autonomous driving, thereby completing risk identification of autonomous driving.

In an example of this embodiment, before the inputting the spatial-temporal interaction feature of the current scene into a pre-trained model, the method further includes: determining a category of a third obstacle, where the category includes an obstacle having an interaction risk or an obstacle having no interaction risk, and the third obstacle is a dynamic obstacle in a test scene; obtaining a predicted spatial-temporal trajectory of the third obstacle and a planned spatial-temporal trajectory of a test vehicle; establishing a spatial-temporal interaction scene graph of the test scene based on the predicted spatial-temporal trajectory of the third obstacle, the planned spatial-temporal trajectory of the test vehicle, and a preset map parameter; obtaining a spatial-temporal interaction feature of the test scene from the spatial-temporal interaction scene graph of the test scene; and training a classification model based on the category of the third obstacle and the spatial-temporal interaction feature of the test scene, to obtain the pre-trained model. The preset map parameter for establishing the spatial-temporal interaction scene graph of the test scene is also referred to as a second map parameter. The second map parameter may be preset, or may be obtained on another occasion, which is not limited in the embodiments of this application.

In an example, all traveling data of the autonomous driving test vehicle may be obtained in advance, including data of the test scene of the test vehicle collected by sensors such as a laser radar, an image sensor, and an inertial navigation unit, and obstacles in the test scene are determined. For example, an obstacle at a distance to the test vehicle less than a preset threshold may be used as the obstacle in the test scene. The obstacles in the test scene may include a dynamic obstacle and a static obstacle. One or more third obstacles may exist. The third obstacle may be the dynamic obstacle in the test scene described above, or may be the static obstacle in the test scene, and may further include the dynamic obstacle and the static obstacle in the test scene.

After the obstacles in the test scene are determined, the obstacles are classified to determine whether the obstacle in the test scene is an obstacle having an interaction risk. The obstacle in this paragraph is a third obstacle. By distinguishing between categories of the third obstacle, positive and negative training samples may be formed based on two categories (that is, having an interaction risk and having no interaction risk) in a subsequent process of training the classification model, to ensure accuracy of the training and obtain a more accurate pre-trained model. In an example, the obstacles in the test scene may be classified and marked through manual marking.

In an example of this embodiment, the determining a category of a third obstacle includes: determining an interaction time period between the third obstacle and the test vehicle, where the interaction time period is a time period during which a distance between the third obstacle and the test vehicle is less than a preset distance threshold; determining the category of the third obstacle as the obstacle having an interaction risk in a case that the test vehicle experiences a sudden deceleration during the interaction time period; and determining the category of the third obstacle as the obstacle having no interaction risk in a case that the test vehicle does not experience the sudden deceleration (no sudden deceleration occurs) during the interaction time period. The preset distance threshold may be preset, or may be a distance threshold obtained on another occasion, which is not limited in the embodiments of this application.

In this embodiment, the category of the third obstacle may be determined manually, and may further be determined based on the test scene data collected from the test vehicle. The interaction time period between the obstacle and the test vehicle in the test scene may be a time period during which a distance between the obstacle and the test vehicle is less than a preset distance threshold. If the test vehicle experiences the sudden deceleration within the time period, it may be determined that a risk occurs during the interaction between the obstacle and the test vehicle. Therefore, the obstacle may be marked as the obstacle having an interaction risk. If the test vehicle does not experience the sudden deceleration within the interaction time period, it indicates that no risk occurs during the interaction between the obstacle and the test vehicle. Therefore, the obstacle may be marked as the obstacle having no interaction risk. Exemplarily, the sudden deceleration includes a value of a deceleration acceleration being greater than an acceleration threshold. A manner of determining the sudden deceleration is not limited in the embodiments of this application.

In an example of this embodiment, the obtaining a predicted spatial-temporal trajectory of the third obstacle and a planned spatial-temporal trajectory of a test vehicle includes: obtaining a predicted spatial-temporal trajectory of the third obstacle and a planned spatial-temporal trajectory of the test vehicle at a first time interval in a preset time (also referred to as a reference time) before the test vehicle experiences the sudden deceleration in a case that the category of the third obstacle is the obstacle having the interaction risk; and obtaining a predicted spatial-temporal trajectory of the third obstacle and a planned spatial-temporal trajectory of the test vehicle at a second time interval within the interaction time period in a case that the category of the third obstacle is the obstacle having no interaction risk.

After the category of the obstacle (that is, the third obstacle) in the test scene is determined, a predicted spatial-temporal trajectory of the obstacle and a planned spatial-temporal trajectory of the test vehicle may be obtained based on the category of the obstacle. In a case that the category of the third obstacle is the obstacle having an interaction risk, the predicted spatial-temporal trajectory of the obstacle and the planned spatial-temporal trajectory of the test vehicle at each moment may be obtained at the first time interval when the test vehicle experiences the sudden deceleration. For example, a time of the sudden deceleration of the test vehicle is the third second, and the first time interval is 50 ms. Therefore, a predicted spatial-temporal trajectory of the obstacle and a planned spatial-temporal trajectory of the test vehicle in the 2.95^{th} second, the 2.90^{th} second, ... may be obtained. Exemplarily, a manner of obtaining the trajectory may be obtaining the test scene data collected from the test vehicle at the moment, and obtaining a predicted spatial-temporal trajectory and a planned spatial-temporal trajectory based on the data.

In a case that the category of the third obstacle is the obstacle having no interaction risk, the predicted spatial-temporal trajectory of the obstacle and the planned spatial-temporal trajectory of the test vehicle at each moment may be obtained at the second time interval within the interaction time period between the test vehicle and the obstacle. For example, the interaction time period is the 10^{th} second to the 15^{th} second, and the second time interval is 100 ms. Therefore, a predicted spatial-temporal trajectory of the obstacle and a planned spatial-temporal trajectory of the test vehicle in the 10^{th} second, the 10.1^{st} second, ..., and the 15^{th} second may be obtained.

In an example, the first time interval may be less than the second time interval, to obtain more trajectory data of the obstacle having an interaction risk, so as to obtain more trajectory data of the obstacle having an interaction risk, and enhance a learning effect of a model.

In this embodiment, after the predicted spatial-temporal trajectory of the third obstacle and the planned spatial-temporal trajectory of the test vehicle are obtained, a spatial-temporal interaction scene graph of a test scene at each moment may be respectively established based on the predicted spatial-temporal trajectory and the planned spatial-temporal trajectory at each moment. A spatial-temporal interaction feature may be extracted from the spatial-temporal interaction scene graph of each test scene as a set of training data, to train a classification model. In addition, the method for establishing the spatial-temporal interaction scene graph of the test scene is consistent with that in the foregoing embodiment, and the details are not described herein.

After the spatial-temporal interaction scene graph of the test scene is established, the category of the third obstacle may be used as supervision, and the classification model is trained through the spatial-temporal interaction feature in the spatial-temporal interaction scene graph of the test scene, to obtain a pre-trained model.

In an example, a location, a grid, and grid semantic information corresponding to the static obstacle (also referred to as a fourth obstacle) in the test scene at each moment in the spatial-temporal interaction scene graph of the test scene may further be determined. When the spatial-temporal interaction feature of the test scene is extracted, impact of the static obstacle (that is, the foregoing fourth obstacle) is also considered, to train the model.

In an example, the classification model may be an eXtreme gradient boosting (XGBoost) model. A type of the classification model is not limited in the embodiments of this application, and another type of classification model may also be selected based on an actual requirement in the embodiments of this application.

In this embodiment, it is determined, based on sudden deceleration data through data mining, whether an interaction risk exists between the obstacle and the test vehicle. For an obstacle having an interaction risk, a spatial-temporal interaction scene graph is obtained before a risk occurs, that is, before a sudden deceleration moment, to train a classification model, so that the classification model may be trained through semantic information in the spatial-temporal interaction scene graph before the sudden deceleration moment, to find in advance whether the interaction risk exists between the obstacle and the vehicle, thereby achieving a training objective and obtaining a pre-trained model. In addition, in a case that a plurality of third obstacles exist, the model may determine interaction safety of the autonomous driving vehicle by considering trajectory conditions of all obstacles, that is, considering impact between obstacles. Therefore, this application can also adapt to a more complex driving scene.

In an example of this embodiment, after the determining interaction safety of the autonomous driving vehicle in the current scene through the pre-trained model, the method further includes: reminding a driver to take over the vehicle and/or taking over the vehicle through the cloud in a case that the autonomous driving vehicle has an interaction risk in the current scene. The autonomous driving vehicle refers to a vehicle having an autonomous driving function. After the vehicle is taken over by the driver or the cloud, the vehicle that is taken over is still an autonomous driving vehicle. Alternatively, in a case that the autonomous driving vehicle has an interaction risk in the current scene, at least one of the following steps is performed: reminding a driver to take over the autonomous driving vehicle; and taking over the autonomous driving vehicle through the cloud.

After the pre-trained model is obtained, the spatial-temporal interaction feature of the current scene of the autonomous driving vehicle may be inputted into the pre-trained model, to determine whether an interaction risk exists between the first obstacle and the vehicle (that is, the autonomous driving vehicle). In this way, the interaction risk between each obstacle (that is, the first obstacle) and the vehicle (that is, the autonomous driving vehicle) may be separately determined. Through consideration of all obstacles (including the first obstacle) in the current scene, the interaction safety of the autonomous driving vehicle in the current scene is determined. If the vehicle (that is, the autonomous driving vehicle) has an interaction risk in the current scene, the autonomous driving vehicle may remind the driver to take over and control the vehicle, or call remote operation and control (that is, the cloud) to intervene.

In this example, a spatial-temporal interaction scene graph of a current driving scene is constructed through a predicted spatial-temporal trajectory of the dynamic obstacle and a traveling trajectory of the autonomous driving vehicle, and interaction safety of the autonomous driving vehicle is determined based on the spatial-temporal interaction scene graph and a pre-trained model. In this manner, an interaction risk may be predicted at a relatively long distance from a risk point based on a predicted obstacle trajectory and a planned spatial-temporal trajectory of the autonomous driving vehicle, to reserve processing time for a driver or the vehicle to take risk avoidance actions in time.

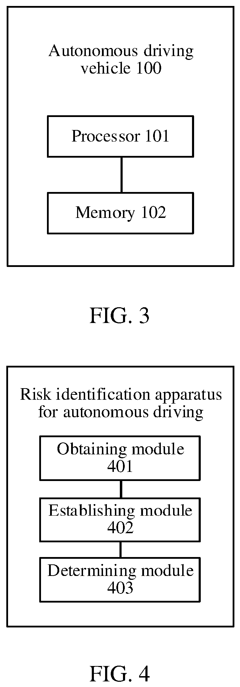

This embodiment provides an autonomous driving vehicle 100, as shown in FIG. 3, including a processor 101 and a memory 102. The memory 102 stores a computer program. The computer program, when executed by the processor 101, implements each process (for example, each process is implemented by the autonomous driving vehicle 100) of the foregoing embodiments of the risk identification method for autonomous driving, and can achieve a same technical effect. To avoid repetition, details are not described herein again. Exemplarily, the processor 101 and the memory 102 may be integrated into a computer device. The computer device is installed in the autonomous driving vehicle 100. An installation location of the computer device is not limited in the embodiments of this application.

This embodiment provides a risk identification apparatus for autonomous driving. As shown in FIG. 4, the apparatus includes the following several modules:
an obtaining module 401, configured to obtain a predicted spatial-temporal trajectory of a first obstacle and a planned spatial-temporal trajectory of an autonomous driving vehicle, where the first obstacle is a dynamic obstacle in a current scene;
an establishing module 402, configured to establish a spatial-temporal interaction scene graph of the current scene based on the predicted spatial-temporal trajectory of the first obstacle, the planned spatial-temporal trajectory of the autonomous driving vehicle, and a first map parameter; and
a determining module 403, configured to obtain a spatial-temporal interaction feature of the current scene based on the spatial-temporal interaction scene graph of the current scene, input the spatial-temporal interaction feature of the current scene into a pre-trained model, and determine interaction safety of the autonomous driving vehicle in the current scene through the pre-trained model, where the interaction safety is configured for indicating a risk of autonomous driving.

In some implementations, the spatial-temporal interaction feature includes at least one of a vehicle speed, an obstacle speed, an obstacle type, location time information, a relative speed between an obstacle and the autonomous driving vehicle, a relative orientation between the obstacle and the autonomous driving vehicle, an interaction time distance between the obstacle and the autonomous driving vehicle, and an interaction space distance between the obstacle and the autonomous driving vehicle. The vehicle speed includes a speed of the autonomous driving vehicle, and the obstacle includes the first obstacle.

In some implementations, the establishing module 402 is configured to: establish a grid map of the current scene based on the first map parameter, where the first map parameter includes a map size parameter and a map resolution parameter; determine a first grid corresponding to the predicted spatial-temporal trajectory of the first obstacle in the grid map, and determine a second grid corresponding to the planned spatial-temporal trajectory of the autonomous driving vehicle in the grid map; determine grid semantic information in the first grid and grid semantic information in the second grid based on the predicted spatial-temporal trajectory and the planned spatial-temporal trajectory; and input the grid semantic information into a corresponding grid to obtain the spatial-temporal interaction scene graph of the current scene.

In some implementations, the determining module 403 is configured to obtain the grid semantic information from the spatial-temporal interaction scene graph of the current scene as the spatial-temporal interaction feature of the current scene.

In some implementations, the determining module 403 is further configured to determine a location of a second obstacle, where the second obstacle is a static obstacle in the current scene; and determine a third grid corresponding to the second obstacle in the grid map, and determine grid semantic information in the third grid based on the location of the second obstacle.

In some implementations, the determining module 403 is further configured to: determine a category of a third obstacle, where the category includes an obstacle having an interaction risk or an obstacle having no interaction risk, and the third obstacle is a dynamic obstacle in a test scene; obtain a predicted spatial-temporal trajectory of the third obstacle and a planned spatial-temporal trajectory of a test vehicle; establish a spatial-temporal interaction scene graph of the test scene based on the predicted spatial-temporal trajectory of the third obstacle, the planned spatial-temporal trajectory of the test vehicle, and a second map parameter; obtain a spatial-temporal interaction feature of the test scene from the spatial-temporal interaction scene graph of the test scene; and train a classification model based on the category of the third obstacle and the spatial-temporal interaction feature of the test scene, to obtain the pre-trained model.

In some implementations, the determining module 403 is configured to: determine an interaction time period between the third obstacle and the test vehicle, where the interaction time period is a time period during which a distance between the third obstacle and the test vehicle is less than a distance threshold; determine the category of the third obstacle as the obstacle having the interaction risk in a case that the test vehicle experiences a sudden deceleration during the interaction time period, where the sudden deceleration includes a value of a deceleration acceleration being greater than an acceleration threshold; and determine the category of the third obstacle as the obstacle having no interaction risk in a case that the test vehicle does not experience the sudden deceleration during the interaction time period.

In some implementations, the determining module 403 is configured to obtain a predicted spatial-temporal trajectory of the third obstacle and a planned spatial-temporal trajectory of the test vehicle at a first time interval in a reference time before the test vehicle experiences the sudden deceleration in a case that the category of the third obstacle is the obstacle having the interaction risk; and obtain a predicted spatial-temporal trajectory of the third obstacle and a planned spatial-temporal trajectory of the test vehicle at a second time interval within the interaction time period in a case that the category of the third obstacle is the obstacle having no interaction risk.

In some implementations, the apparatus further includes an execution module, configured to perform at least one of the following steps in a case that the autonomous driving vehicle has an interaction risk in the current scene: reminding a driver to take over the autonomous driving vehicle; and taking over the autonomous driving vehicle through the cloud.

It should be noted that when the apparatus provided in the foregoing embodiment implements the functions of the apparatus, only division of the foregoing functional modules is used as an example for description. In practical application, the functions may be completed by different functional modules as required. To be specific, an internal structure of a device is divided into different functional modules to complete all or part of the functions described above. In addition, the apparatus provided in the foregoing embodiments and the method embodiments belong to the same concept. For details of an implementation process, reference may be made to the method embodiments. Details are not described herein again.

This embodiment further provides a non-temporary computer-readable storage medium. The non-temporary computer-readable storage medium stores at least one computer program, the at least one computer program being loaded and executed by a processor to cause a computer device to implement each process of the foregoing embodiment of the risk identification method for autonomous driving.

This embodiment further provides a computer program product or a computer program, the computer program product or the computer program including a computer instruction, the computer instruction being stored in a computer-readable storage medium. A processor of a computer device reads the computer instruction from the computer-readable storage medium, and the processor executes the computer instruction, so that the computer device performs each process of the foregoing embodiment of the risk identification method for autonomous driving.

Various embodiment in the present disclosure are described in a progressive manner, and same and similar parts between the various embodiments may be referred to each other. Each embodiment focuses on a difference from other embodiments. In particular, for apparatus and device embodiments, since the embodiments are basically similar to the method embodiment, the description is relatively simple. For related parts, reference is made to the partial description of the method embodiment.

Particular embodiments of the present disclosure are described above. Other embodiments fall within the scope of the appended claims. In some cases, the actions or steps described in the claims may be performed in a sequence different from that in the embodiments, and desired results may still be achieved. In addition, the processes depicted in the accompanying drawings are not necessarily performed in a specific order or sequential order to achieve the desired results. In some implementations, multitasking and parallel processing are also possible or may be advantageous.

The embodiments of the present disclosure may be a system, a method, and/or a computer program product. The computer program product may include a computer-readable storage medium, having a computer-readable program instruction loaded thereon for causing a processor to implement all aspects of the embodiments of the present disclosure.

The computer-readable storage medium may be a tangible device that may hold and store an instruction used by an instruction execution device. For example, the computer-readable storage medium may be but is not limited to, an electrical storage device, a magnetic storage device, an optical storage device, an electromagnetic storage device, a semiconductor storage device, or any appropriate combination thereof. Exemplary examples (a non-exhaustive list) of the computer-readable storage medium include: a portable computer disk, a hard disk, a random access memory (RAM), a read-only memory (ROM), an erasable programmable ROM (EPROM or a flash memory), a static RAM (SRAM), a portable compact disk ROM (CD-ROM), a digital versatile disc (DVD), a memory stick, a floppy disk, a mechanical encoding device, for example, a punched card having instructions stored thereon or a protrusion structure in a groove, and any appropriate combination thereof. The computer-readable storage medium used herein is not construed as an instantaneous signal, for example, a radio wave or another freely propagating electromagnetic wave, an electromagnetic wave propagating through a waveguide or another transmission medium (for example, an optical pulse passing through an optical fiber cable), or an electric signal transmitted through an electric wire.

The computer-readable program instructions described herein may be downloaded from the computer-readable storage medium to each computing/processing device, or downloaded to an external computer or an external storage device through a network such as the Internet, a local area network (LAN), a wide area network (WAN), and/or a wireless network. The network may include a copper transmission cable, optical fiber transmission, wireless transmission, a router, a firewall, a switch, a gateway computer, and/or an edge server. A network adapter card or a network interface in each computing/processing device receives a computer-readable program instruction from the network, and forwards the computer-readable program instruction for storage in the computer-readable storage medium in each computing/processing device.

The computer program instruction for performing the operations of the embodiments of the present disclosure may be an assembly instruction, an instruction set architecture (ISA) instruction, a machine instruction, a machine-related instruction, microcode, a firmware instruction, state setting data, or source code or target code written in any combination of one or more programming languages. The programming languages include an object-oriented programming language such as Smalltalk or C++, and a conventional procedural programming language such as C programming language or a similar programming language. The computer-readable program instruction may be completely executed on a user computer, partially executed on the user computer, executed as an independent software package, partially executed on the user computer and partially executed on a remote computer, or completely executed on a remote computer or a server. In a situation involving the remote computer, the remote computer may be connected to the user computer through any type of network including a LAN or a WAN, or may be connected to an external computer (for example, connected to the external computer through the Internet by using an Internet service provider). In some embodiments, an electronic circuit is personalized and customized through state information of the computer-readable program instruction, for example, a programmable logic circuit, a field programmable gate array (FPGA), or a programmable logic array (PLA). The electronic circuit may execute the computer-readable program instruction, thereby implementing all aspects of the embodiments of the present disclosure.

All of the aspects of the embodiments of the present disclosure are described herein with reference to the flowcharts and/or the block diagrams of the method, the apparatus (system), and the computer program product in the embodiments of the present disclosure. It should be understood that each block in the flowcharts and/or the block diagrams and a combination of the blocks in the flowcharts and/or the block diagrams may be both implemented through the computer-readable program instructions.

The computer-readable program instructions may be provided to a general-purpose computer, a dedicated computer, or a processor of another programmable data processing apparatus, to produce a machine. In this way, the instructions, when executed through the computer or the processor of the another programmable data processing apparatus, generate an apparatus that implements the functions/actions specified in one or more blocks in the flowcharts and/or the block diagrams. The computer-readable program instructions may alternatively be stored in the computer-readable storage medium. The instructions cause the computer, the programmable data processing apparatus, and/or another device to operate in a specific manner. Therefore, the computer-readable medium storing the instructions includes a manufactured product, which includes instructions for implementing all aspects of the functions/actions specified in one or more blocks in the flowcharts and/or the block diagrams.

The computer-readable program instructions may alternatively be loaded to the computer, the another programmable data processing apparatus, or the another device, so that a series of operations and steps are performed on the computer, the another programmable data processing apparatus, or the another device, to generate a process of computer implementation. In this way, the instructions executed on the computer, the another programmable data processing apparatus, or the another device implement the functions/actions specified in one or more blocks in the flowcharts and/or the block diagrams.

The flowcharts and block diagrams in the accompanying drawings show a system architecture, functions, and operations that may be implemented by using the system, the method, and the computer program product according to multiple embodiments of the present disclosure. In this regard, each block in the flowcharts or the block diagrams may represent a module, a program segment, or a part of an instruction. The module, the program segment, or the part of the instruction includes one or more executable instructions for implementing a specified logic function. In some alternative implementations, functions annotated in the blocks may also be performed in an order different from that annotated in the accompanying drawings. For example, two consecutive blocks may be executed in parallel, or may sometimes be executed in reverse order, which depends on the functions involved. It should also be noted that each box of the block diagrams and/or the flowcharts and a combination of boxes in the block diagrams and/or the flowcharts may be implemented by a dedicated hardware-based system that performs specified functions or actions, or may be implemented by a combination of dedicated hardware and a computer instruction. It is well-known to a person skilled in the art that implementations through hardware, software, and a combination of software and hardware are all equivalent.

The embodiments of the present disclosure have been described above, and the above description is exemplary, non-exhaustive, and is not limited to the disclosed embodiments. Many modifications and changes are apparent to a person of ordinary skill in the art without departing from the scope of the described embodiments. The terms used herein are selected to best explain the principles, practical applications of the various embodiments, or improvements to the technology in the market, or to enable others of ordinary skill in the art to understand the embodiments disclosed herein.

## Claims

1. A risk identification method for autonomous driving, the method comprising:
obtaining a predicted spatial-temporal trajectory of a first obstacle and a planned spatial-temporal trajectory of an autonomous driving vehicle, wherein the first obstacle is a dynamic obstacle in a current scene;
establishing a spatial-temporal interaction scene graph of the current scene based on the predicted spatial-temporal trajectory of the first obstacle, the planned spatial-temporal trajectory of the autonomous driving vehicle, and a first map parameter; and
obtaining a spatial-temporal interaction feature of the current scene based on the spatial-temporal interaction scene graph of the current scene, inputting the spatial-temporal interaction feature of the current scene into a pre-trained model, and determining interaction safety of the autonomous driving vehicle in the current scene through the pre-trained model, wherein the interaction safety is configured for indicating a risk of autonomous driving.

2. The method according to claim 1, wherein the spatial-temporal interaction feature comprises at least one of a vehicle speed, an obstacle speed, an obstacle type, location time information, a relative speed between an obstacle and the autonomous driving vehicle, a relative orientation between the obstacle and the autonomous driving vehicle, an interaction time distance between the obstacle and the autonomous driving vehicle, and an interaction space distance between the obstacle and the autonomous driving vehicle, the vehicle speed comprises a speed of the autonomous driving vehicle, and the obstacle comprises the first obstacle.

3. The method according to claim 1, wherein the establishing a spatial-temporal interaction scene graph of the current scene based on the predicted spatial-temporal trajectory of the first obstacle, the planned spatial-temporal trajectory of the autonomous driving vehicle, and a first map parameter comprises:
establishing a grid map of the current scene based on the first map parameter, wherein the first map parameter comprises a map size parameter and a map resolution parameter;
determining a first grid corresponding to the predicted spatial-temporal trajectory of the first obstacle in the grid map, and determining a second grid corresponding to the planned spatial-temporal trajectory of the autonomous driving vehicle in the grid map;
determining grid semantic information in the first grid and grid semantic information in the second grid based on the predicted spatial-temporal trajectory and the planned spatial-temporal trajectory; and
inputting the grid semantic information into a corresponding grid to obtain the spatial-temporal interaction scene graph of the current scene.

4. The method according to claim 3, wherein the obtaining a spatial-temporal interaction feature of the current scene based on the spatial-temporal interaction scene graph of the current scene comprises:
obtaining the grid semantic information from the spatial-temporal interaction scene graph of the current scene as the spatial-temporal interaction feature of the current scene.

5. The method according to claim 3, wherein before the inputting the grid semantic information into a corresponding grid to obtain the spatial-temporal interaction scene graph of the current scene, the method further comprises:
determining a location of a second obstacle, wherein the second obstacle is a static obstacle in the current scene; and
determining a third grid corresponding to the second obstacle in the grid map, and determining grid semantic information in the third grid based on the location of the second obstacle.

6. The method according to claim 1, wherein before the inputting the spatial-temporal interaction feature of the current scene into a pre-trained model, the method further comprises:
determining a category of a third obstacle, wherein the category comprises an obstacle having an interaction risk or an obstacle having no interaction risk, and the third obstacle is a dynamic obstacle in a test scene;
obtaining a predicted spatial-temporal trajectory of the third obstacle and a planned spatial-temporal trajectory of a test vehicle;
establishing a spatial-temporal interaction scene graph of the test scene based on the predicted spatial-temporal trajectory of the third obstacle, the planned spatial-temporal trajectory of the test vehicle, and a second map parameter;
obtaining a spatial-temporal interaction feature of the test scene from the spatial-temporal interaction scene graph of the test scene; and
training a classification model based on the category of the third obstacle and the spatial-temporal interaction feature of the test scene, to obtain the pre-trained model.

7. The method according to claim 6, wherein the determining a category of a third obstacle comprises:
determining an interaction time period between the third obstacle and the test vehicle, wherein the interaction time period is a time period during which a distance between the third obstacle and the test vehicle is less than a distance threshold;
determining the category of the third obstacle as the obstacle having the interaction risk in a case that the test vehicle experiences a sudden deceleration during the interaction time period, wherein
the sudden deceleration comprises a value of a deceleration acceleration being greater than an acceleration threshold; and
determining the category of the third obstacle as the obstacle having no interaction risk in a case that the test vehicle does not experience the sudden deceleration during the interaction time period.

8. The method according to claim 7, wherein the obtaining a predicted spatial-temporal trajectory of the third obstacle and a planned spatial-temporal trajectory of a test vehicle comprises:
obtaining a predicted spatial-temporal trajectory of the third obstacle and a planned spatial-temporal trajectory of the test vehicle at a first time interval in a reference time before the test vehicle experiences the sudden deceleration in a case that the category of the third obstacle is the obstacle having the interaction risk; and
obtaining a predicted spatial-temporal trajectory of the third obstacle and a planned spatial-temporal trajectory of the test vehicle at a second time interval within the interaction time period in a case that the category of the third obstacle is the obstacle having no interaction risk.

9. The method according to claim 1, wherein after the determining interaction safety of the autonomous driving vehicle in the current scene through the pre-trained model, the method further comprises:
performing at least one of the following steps in a case that the autonomous driving vehicle has an interaction risk in the current scene:
reminding a driver to take over the autonomous driving vehicle; and
taking over the autonomous driving vehicle through the cloud.

10. An autonomous driving vehicle, having a processor and a memory, wherein the memory stores a computer instruction, and when the computer instruction is executed by the processor, the autonomous driving vehicle implements the steps of the method according to any of claims 1 to 9.

11. A non-temporary computer-readable storage medium, storing at least one computer program, wherein the at least one computer program is loaded and executed by a processor to cause a computer device to implement the steps of the method according to any of claims 1 to 9.

12. A computer program product, comprising a computer instruction, wherein the computer instruction is stored in a non-temporary computer-readable storage medium, a processor of a computer device reads the computer instruction from the non-temporary computer-readable storage medium, and the processor executes the computer instruction to cause the computer device to implement the steps of the method according to any of claims 1 to 9.
